# EUROPEAN PATENT SPECIFICATION

(11) **EP 2 111 097 B1**
(45) Date of publication and mention of the grant of the patent: **23.05.2012**
(21) Application number: 07834470.2
(22) Date of filing: 16.10.2007
(51) Int. Cl.: A01G 7/04

(54) **METHOD AND APPARATUS FOR THE REDUCTION OF HARMFUL NITRATES IN PLANTS USING RADIANT FLUX GENERATED BY A SOLID-STATE ILLUMINATOR**
VERFAHREN UND GERÄT ZUR VERRINGERUNG VON SCHADNITRATEN IN PFLANZEN UNTER VERWENDUNG VON DURCH EINEN FESTKÖRPER-LEUCHTE ERZEUGTEN STRAHLUNGSFLUSS
PROCÉDÉ ET APPAREIL POUR LA RÉDUCTION DES NITRATES NOCIFS DANS LES PLANTES À L'AIDE D'UN FLUX RADIATIF GÉNÉRÉ PAR UN DISPOSITIF D'ÉCLAIRAGE À SEMI-CONDUCTEUR

(30) Priority: 17.10.2006 LT 2006082
(43) Date of publication of application: 28.10.2009
(73) Proprietor: Uab ''Hortiled'', 44403 Kaunas (LT)
(72) Inventor: ZUKAUSKAS, Arturas, 10219 Vilnius (LT); DUCHOVSKIS, Pavelas, 54334 Babtai, Kauno R. (LT); BLIZNIKAS, Zenius, 10320 Vilnius (LT); SAMUOLIENE, Giedre, 49148 Kaunas (LT); URBONAVICIUTE, Akvile, 48487 Kaunas (LT); VITTA, Pranciskus, 03152 Vilnius (LT)
(74) Representative: Gerasimovic, Liudmila
(86) International application number: PCT/LT2007/000008
(87) International publication number: WO 2008/048080

(56) References cited:
- EP-A- 1 374 665
- EP-A- 1 479 286
- US-A- 5 012 609
- DATABASE WPI Week 200562 Derwent Publications Ltd., London, GB; AN 2005-601209 XP002462381 & JP 2005 245243 A (RYOTO HIRYO KK) 15 September 2005 (2005-09-15) & JP 2005 245243 A (RYOTO HIRYO KK) 15 September 2005 (2005-09-15) cited in the application

## Description

The invention relates to growth of plants, when at the harvesting stage or just after it, plants are irradiated by radiant flux generated by a solid-state illuminator in order to direct the photosynthetic and metabolic processes that are still present in the plants in such a way that the concentration of nitrates is reduced while the nutritional quality and other properties useful for humans are preserved.

The present invention is directly connected to the use of solid-state lighting devices such as light-emitting diodes (LEDs) for the control of photosynthetic and metabolic processes in plants.

LEDs are the sources of incoherent light utilizing the principle of injection electroluminescence, in which differently from all other sources, the process of power conversion to light requires no heating of the material or its particles. Since the efficiency of LENDS is not restricted by physical reasons, potentially they can by more efficient than other sources. Additionally, in comparison with conventional sources, LEDs feature numerous advantages, such as mechanical robustness, compactness, longevity, fast switching, no abrupt failure' low operation voltage, compatibility with computer electronics, narrow-band emission without undesired spectral components, free from harmful materials (mercury), and flexibility in terms of assembling into arrays of different shape. This results that LED-based solid-state lighting technology is gradually penetrating in all spheres of application of artificial light, such as optical signage, displays, decorative, architectural, entertainment, medical and general lighting, and optical measurements [A. 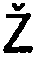 ukauskas, M. S. Shur, R. Gaska, Introduction to Solid-State Lighting (Wiley, New York, 2002), xii+207 p., ISBN 0471215740].

Since by tuning the chemical composition of semiconductors used in LEDs, the quasimonochromatic radiation can be easily tailored to the absorption spectra of photosynthetic and photomorphogenetic pigments of plants, solid-state lighting is an attractive technology for plant cultivation.

Soon after the development of high-brightness red AlGaAs LEDs, the photosynthetic productivity of plants was proposed to increase by illumination using quasimonochromatic light that match the main peak of chlorophyll absorption spectrum (around 660 nm) in such a way that energy losses that are inherent for absorption of shorter-wavelength light were avoided [Bula R. J., Morrow R. C., Tibbitts T. W., Barta D. J., Ignatius R. W., Martin T. S., "Light-emitting diodes as a radiation source for plants," HortScience 26 (2), p. 203-205 (1991)].

In US Patent No 5,012,609 (1991), already three spectral ranges were claimed to be covered by a solid-state illuminator, which supports growth and formation (morphogenesis) of plants, namely, 620-680 nm for the meeting of the photosynthetic needs of plants, 700-760 nm for the photomorphogenetic needs, and 400-500 nm for the phototropic and photomorphogenetic needs. The same patent claimed the methods of continuous-wave and pulsed driving of the LEDs.

In the subsequent patents, various designs of illuminators and plant cultivation chambers (phytotrons) were described. In US Patent No 5,278,432 (2004), a design of illuminator, which contains a heat sink substrate with the LEDs chips mounted on it, was disclosed. The heat sink substrate is equipped with means of cooling, including a fan. The LEDs are driven using ballast-type electronic regulators that are powered by a source of voltage. In US Patent No 5,278,432 (1997), a design of a phytotron illuminator with heat sinking based on lead frames and with external reflectors for the concentration of the radiant flux is disclosed. In Patent Applications JP2004081110 (2004) and JP2005000155 (2005), chambers with solid-state lighting for both plant growth and storing were proposed. In US Patent No 6,688,759 (2004) a chandelier-type solid-state illuminator with the LEDs mounted in several planes was disclosed.

In US Patents No 6,474,838 (2002) and 6,554,450 (2003), designs of phytotrons for young plants were disclosed and the used wavelengths and LED driving circuits were specified. US patent No 6,725,598 (2004) discloses a phytotron chamber with solid-state lighting, in which a plurality of sensors is used to respond to environmental parameters including illuminance, as well as to respond to the variation of plant parameters. Signals provided by the sensors are used for the control and maintaining of the cultivation environment.

Some patents are aimed to utilize specific advantages of LEDs. For instance in European Patent EP1374665 (2002), parameters of the pulsed driving of LEDs (period from 2 µs to 1 ms and duty cycle from 20 to 70%) with the optimal values resulting in the highest productivity of plants, are disclosed. In US Patent No 6,921,182 (2005), spectral and directional flexibility of LEDs is utilized. Here, LEDs of different colours and directionality were applied for a uniform illumination of the upper and lower leaves of a plant, using the dependence of the leaves optical density on wavelength.

With continuous maturing of LED technology and increasing of the LED power and decreasing of cost, solid-state lighting technology that emerged from small phytotron chambers became attractive for large-scale industrial plant cultivation in greenhouses. European Patent EP1300066 (2003) discloses an industrial method of plant cultivation, where trays with seedlings are transported by means of a conveyor under a slanted solid-state lighting panel in such a way that with an increase in plant height, the position of the light source is gradually elevated over the conveyor. The lighting panel is composed of an air- or water-cooled metal (aluminium) substrate, an insulating layer with leads, LEDs chips attached to the leads by means of conductive glue, the chips being equipped with reflectors and domes made of a translucent plastic, and a translucent flat cover. The cavity between the LEDs and the cover is sealed and filled with a dry inert gas.

In European Patent EP1479286 (2004), which in its nature is the most close to the proposed apparatus, a solid-state illuminator for the supplementing of natural light in greenhouses is disclosed. The illuminator contains LEDs mounted on a long and narrow heat sink with ribs that can be attached to the greenhouse support frame. Differently from prior art, such a rail-shaped heat sink blocks only a small portion of sunlight.

The abovementioned basic patents and patent applications related to the use of LEDs in plant cultivation contain numerous drawbacks that hinder the further penetration of solid-state lighting to industrial horticulture.

First, the descriptions of the patents and patent applications are often based on the statements that LEDs are more efficient than conventional sources of light used for plant cultivation [US 5 012 609 (1991), EP1374665 (2002), EP1300066 (2003), EP1479286 (2004), US 6 921 182 (2005)]. However, in spite of the lack of physical reasons that limit the internal quantum efficiency of light sources operating based on the injection electroluminescence principle, the efficiency of commercially available LEDs is not high because of nonradiative recombination, difficulties of light extraction from high-refraction-index material, and, in some semiconductors (AlGaAs, AlGaInP), because of influence of the indirect band gap [A. 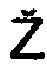 ukauskas, M. S. Shur, R. Gaska, Introduction to Solid-State Lighting (Wiley, New York, 2002), xii+207 p., ISBN 0471215740]. For instance, the most advanced AlGaAs LEDs have radiant efficiency of 20% at 730 nm wavelength and below 10% at 660 nm wavelength; the radiant efficiency of high-power red (640 nm) AlGainP and blue InGaN (450 nm) LEDs does not exceed 20% and 10%, respectively [G. Tamulaitis, P. Duchovskis, Z. Bliznikas, K. Breivė, R. Ulinskaitė, A. Brazaitytė, A. Novi 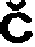 kovas, and A. 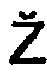 ukauskas, "High-power light-emitting diode based facility for plant cultivation," J. Phys. D 38 (17), pp.3182-3187(2005)]. It is to be noted that in recent years, these indicatives of the LED efficiency are growing rather slowly. Meanwhile, the efficiency of standard high-pressure sodium and fluorescence lamps that are widely used in greenhouses is about 30%. Actually, due to the possibility to better tailor the emission spectrum of LEDs with the absorption spectrum of the phytopigments and due to advantages offered by pulsed lighting, the productivity of plants grown under solid-state lighting can be about 1.5 times higher [EP1374665 (2002); G. Tamulaitis, P. Duchovskis, Z. Bliznikas, K. Breivė, R. Utinskaitė. A. Brazaitytė, A. Novi 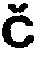 kovas, and A. 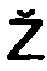 ukauskas, "High-power light-emitting diode based facility for plant cultivation," J. Phys. D 38 (17), pp.3182-3187(2005)]. However, the operating cost of solid-state lighting in plant cultivation is hardly smaller or exceeds that of conventional lighting. Also, taking into account that the capital cost of solid-state lighting is several tens times higher than that of conventional lighting, the ownership cost per unit light flux generated by LEDs is high and use of LEDs in plant cultivation throughout the entire cycle of vegetation, as proposed in prior art, is economically still unattractive.

Second, a widely spread opinion is that LEDs generate less heat than conventional sources [US 6 474 838 (2002), EP1374665 (2002), US 6 554 450 (2003)]. Actually, LEDs used in plant cultivation do not emit in the far infrared region, since the temperature of the semiconductor chips is low. However, because of internal power losses, LEDs produce thermal energy that is to be sunk away. Although the heat sink is cooler than the tube of a fluorescent or discharge lamp, the overall flux of thermal radiation is not smaller than that of conventional sources because of a large area of the sink. On the other hand, this can be naturally understood, since the efficiency of LEDs is not high and all power that is not converted to light is converted to heat. Therefore, placing of solid-state lighting panels in the proximity of the plants is not always reasonable and can invoke overheating of the plants.

Third, since the cost per unit of light quantity generated by LEDs is high, even small losses are to be avoided. Meanwhile, some patents propose driving circuits with voltage regulation (this requires a ballast resistor [US 5012609 (1991)]), although in order to stabilize the current flowing through a LED string, the voltage drop across the ballast resistor must be much higher than the voltage variation over the string. When an electronic ballast is used [US 5 278 432 (2004)], the losses are smaller but still significant.

Another common type of losses is optical losses caused by an inappropriate design of the protective cover, a translucent glass or plastic plate, which is separated from the plastic dome of a LED by a gap filled with air or another gas [US 5 278 432 (1994), EP1300066 (2003), US 6 725 598 (2004)]. When light falls perpendicularly upon such a plate, 8-10% of the flux is reflected, whereas for larger angles of incidence the losses are even higher. For high-power LEDs that usually have a broad viewing angle, the losses caused by the reflection from a flat cover can amount 20% and more.

Forth, the developers of solid-state lighting systems for plants usually do not take into consideration the variation of the flux generated by LEDs with temperature and aging. Common circuits of LED driving have current measurement based feedback that ensures current regulation [for instance, US 6724156 (2004)]. Meanwhile, when the junction temperature in a red AlGaInP LED varies from 10°C to 60 °C, the radiant flux is reduced by 30%. In addition as LEDs age, the radiant flux gradually drops to 50-70% of the initial value within the exploitation life time. In some patents, the thermal and ageing drift can be compensated using a computer- or microprocessor-based control system [EP1300066 (2003), US6725598 (2004)]. An analogue LED driving circuit [US7019662 (2006] with a photoelectric feedback does not protect the LED from excess current and maintains no constant illuminance. Meanwhile simple solid-state lighting systems for greenhouses [EP 1479286 (2004)] lack unsophisticated and inexpensive method of thermal and aging drift compensation that could simultaneously maintain a constant photosynthetic flux and protect the LEDs from excess current.

While economical constraints do not allow for using solid-state lighting in full-cycle plant cultivation, the advantages offered by LEDs can be used for short-period illumination of greenhouse plants, i.e. within a short part of the growth cycle, e.g. for germination [US 6 474 838 (2002), US 6 554 450 (2003)] or for the modification of phytochemical compound level [EP1626620 (2004)].

On the other hand, a need in improvement of greenhouse vegetable nutritional quality through a reduction of nitrate amount exists. Such increased amount of nitrates are common in plants grown under artificial lighting with fertilizers applied, since because of economical reasons and because of intense thermal radiation of conventional sources of light, the employed photosynthetic photon flux density (about 100 µmol·m⁻²·s⁻¹) is much lower than that of natural sunlight (up to 2000 µmol·m⁻2·s⁻¹). Besides, an increased amount of nitrates is conditioned by that the emission spectrum of common lamps is not completely tailored to photophysiological needs of the plants, the photoperiods used are optimised based rather on the variation of power price within a day than on the plant needs, the amount of artificial fertilizers in soil or in nutrient medium is set for the achievement of a highest productivity of plants, etc. A method for a reduction of nitrate nitrogen in vegetables by treating them by light is known. However with conventional sources of light applied, the illuminance can not be high and the vegetables must be treated for a long time. For instance, in Patent Application JP2005245243 (2005), which discloses a method of the reduction of residuals of harmful nitrates, illuminance starting with 300 Ix (this corresponds to a 5 µmol·m⁻²·s⁻¹ photosynthetic flux density) and vegetable treatment time of at least 3 days and nights before harvesting or at least 7 days after harvesting are proposed. Such a long treatment time can result in a degradation of other nutritional properties of the vegetables because of aging, inappropriate photoperiod, etc. Even more, an insufficient illuminance level can increase the amount of nitrates.

The prior art closest to the proposed method of the reduction of residuals of harmful nitrates in plants is the method of the reduction of harmful nitrates in plants by treating them using a radiant flux disclosed in the abovementioned Patent Application JP2005245243 with the drawbacks as listed.

The prior art closest to the proposed apparatus for the implementation of the method of the reduction of harmful nitrates in plants by illumination using radiant flux generated by a solid-state illuminator is the apparatus for treatment of plants by a photosynthetic photon flux disclosed in the abovementioned European Patent EP1479286, which contains a solid-state illuminator with the LEDs mounted on a long heat sink that can be attached to the greenhouse support frame. The long heat sink is designed in such a way that the plants are minimally obscured from sunlight; however the problem of plant overheating because of an increased radiant flux is not resolved. This apparatus is used to supplement the natural illumination, rather than for the effective reduction of nitrates.

The aim of the invention proposed is to develop a method and apparatus, which allow for the reduction of the harmful nitrate amount in already grown plants without a degradation of their nutritional composition, especially without a reduction of the amount of useful saccharides and vitamins.

The aim is achieved by the method of the reduction of harmful nitrates in plants based on the irradiation of the plants by a photosynthetic photon flux generated by a solid-state illuminator. The novelty is in that the plants are treated by the photosynthetic flux within a time period shorter than 3 days after the growth or at the stage of harvesting. The photosynthetic flux density is varied in the range from 100 to 2000 µmol·m⁻²·s⁻¹ in the wavelength range from 400 to 700 nm with a photoperiod from 12 to 24 hours with thermal radiation of the illuminator being deflected in the direction opposite to the treated plants.

Alternatively, the plants are treated by the photosynthetic photon flux within a time period shorter than 3 days after the growth or at the stage of harvesting. The photosynthetic photon flux density is varied in the range from 40 to 2000 µmol·m⁻²·s⁻¹ in the wavelength range from 400 to 700 nm with a photoperiod from 12 to 24 hours with thermal radiation of the illuminator being deflected in the direction opposite to the treated plants and with the environmental conditions altered by:
- changing the ambient gas composition (CO₂ concentration) in the ambient atmosphere, and/or
- reducing the concentration of the nutrient solution in the harvesting stage, and/or.
- reducing the ambient temperature and maintaining it in the range of 4 to 25° C.

For instance, the ambient gas can contain from 0,05 to 0,3% CO₂, the concentration of the nutrient solution can be reduced up to 0 - 33%, and the ambient temperature can be reduced up to 20 - 25° C. In this case, the photosynthetic flux density can be reduced to 400 to 600 µmol·m⁻²·s⁻¹ in the wavelength range from 640 to 660 nm with the photoperiod ranging from 18 hours.

In an optimal case, the controlled photosynthetic flux density is proposed to reduce up to 40 - 100 µmol·m⁻²·s¹ with the ambient temperature reduced to 4° C and with the optional change in other environmental conditions.

The proposed method of the reduction of harmful nitrates in plants using illumination by radiant flux generated by a solid-state illuminator is implemented by means of an apparatus, which contains an illuminator comprising one LED or a plurality of LEDs, mounted with spacing on an oblong heat sink, which is placed over the treated plants, and a power supply. The novelty is in that the abovementioned oblong heat sink contains one rib or a plurality of ribs, which can be continuous or perforated or pinned and which are directed upwards from the plants with the surface of the ribs being processed in such a way that the thermal radiation factor has a maximal value. Meanwhile, the base of the heat sink the LEDs are mounted on is of much smaller area and its surface is processed in such a way that the thermal radiation factor has a minimal value. The bottom face of the heat sink with the LEDs mounted on it is covered by a translucent lid.

The translucent lid is composed of hemispherical segments, which are centred at the LED chips, and the gap between the lid and the translucent domes of the LEDs is filled with translucent grease or epoxy, which has the refraction index value close to that of the lid and domes.

The circuit of the power supply comprises a switch-mode voltage converter with the output voltage controlled by two feedback loops (photoelectric and protective), which are switched by means of an electronic commutator depending on which of two magnitudes (the net ambient and illuminator-generated photosynthetic photon flux density or the driving current) needs to be limited.

The photoelectric feedback loop has a photoelectric gauge, consisting of:
a photodiode equipped with an optical filter and a first operational amplifier with a resistive feedback loop, and
a second operational amplifier with a first potentiometer.

The optical transmittance spectrum of the filter ranges from 400 to 700 nm and is tailored to the spectral sensitivity of the said photodiode in such a way that the output voltage of the first operational amplifier is proportional to the photosynthetic photon flux density.

The protective feedback loop consists of a third operational amplifier connected to a measuring resistor, which is connected in series with the LED string, and to a second potentiometer.

The feedback-loop commutator consists of two silicon diodes and a resistor connected to a fourth operational amplifier, when the anodes of the said diodes are connected to the outputs of the second (photoelectric-loop) operational amplifier and the third (protective-loop) operational amplifiers, respectively, and the cathodes of the said diodes are connected to the resistor.

The LEDs that are contained in the illuminator emit at one wavelength or at a plurality of wavelengths in the range of 400 to 700 nm.

The advantages of the proposed technical approach are as follows.

The proposed method of the reduction of harmful residuals of nitrate fertilizers in plants by irradiation generated using a solid-state illuminator is advantageous in respect to prior art by that the irradiation is performed by using a high-density photosynthetic photon flux and the reduction of nitrates is achieved within a shorter time after formation and growth of plants (less than in 3 days) without a degradation of the nutritional quality of the plants.

During the treatment of already formed and grown plants by a high-density photosynthetic photon flux, the nitrate residuals accumulated in leaves during the growth are reduced by intense photosynthetic process in photochemical reactions that additionally yield nutrient compounds, such various saccharides (fructose, sucrose, and others), vitamins (C, folic acid), phytohormones (zeatines, indoles), etc. Consequently, the plants arrive to the harvesting terminal with the amount of the residual nitrates reduced and, possibly, with the amount of nutrient compounds increased and are supplied to a consumer in such a condition. Alternatively or additionally, the plants can be treated by a high-density photosynthetic photon flux after harvesting.

Since the treatment by high-density photosynthetic flux lasts for a short time in comparison with the overall vegetation period, a high price of light generated by solid-state illuminators does not significantly affect the cost of vegetables. In addition for each species of vegetables, the expenses for the supplementary illumination can be minimized by choosing an optimal spectrum of light, photosynthetic flux density, treatment time, and photoperiod.

A high-density photosynthetic photon flux for the implementation of the proposed method is generated by an apparatus, which contains high-power LEDs with the emission spectrum matching the absorption spectrum of chlorophylls. The LEDs are mounted on a heat sink, covered by a protective lid and connected to the power supply. The lighting system is designed in such a way that plants are minimally affected by thermal radiation and the price per unit of photosynthetic photon flux is minimized.

The abovementioned apparatus for the implementation of the method differs from prior art in many aspects. First, the design of the heat sink is purposefully adapted for that the high-power thermal radiation released simultaneously with the generation of high-density photosynthetic photon flux is declined from the plants to prevent overheating of those. This design essentially differs from the designs disclosed in prior art [for instance, US 5 012 609 (1991), US 5 278 432 (1994), EP1300066 (2003), US 6 688 759 (2004)], where LEDs are cooled by using continuous heat-conductive panels and a considerable amount of thermal radiation hits the plants. In the proposed invention, similarly to European Patent EP1479286 (2004), a narrow rail-shaped heat sink with the LEDs mounted on the bottom face is used. However, the purpose of such a heat sink is not only to prevent obscuring from ambient natural or artificial lighting, but to ensure a minimal thermal radiation toward plants. In the proposed invention, the heat sink contains specially shaped ribs, which decline the thermal radiation outwards from the plants and the surface of the ribs is processed in such a way that the thermal radiation factor is maximized. Meanwhile, the narrow bottom face of the heat sink is processed in such a way that its thermal radiation factor is minimized.

The second aspect relates to the reduction of optical losses in the illuminator, in order to increase the commercial attractiveness of the proposed method. Such losses are introduced while using a flat protective lid [US 5278432 (1994), EP1300066 (2003), US6725598 (2004)]. Without such a lid as proposed in European Patent Application EP1479286 (2004), the LEDs and the connection circuits are not protected from moisture and the illuminator is difficult to clean from dust and insect contamination. In the proposed invention, a translucent sealed lid composed of hemispherical segments, which are centred with the LED chips, is utilized. The peculiarity of such a lid is in that the gap between the lid and the translucent domes of the LEDs is filled with a translucent grease or epoxy in order to improve the optical contact.

The third aspect of the illuminator design relates to the power supply, which ensures low operating cost. To achieve this, the supply must feature low power loss and save power at the expense of natural lighting. Also, the LEDs must be protected from excess current, which results in a reduced life time. Prior art of the proposed power supply is the switch-mode AC/DC converter with current regulation [US 6 724 156 (2004)] and the LED driving circuit with output flux regulation [US 7 019 662 (2006)], however the proposed invention employs an analogue double-loop feedback, which simultaneously limits the driving current or the net ambient and LED-generated photosynthetic photon flux depending on which of those exceeds the preset limit. Prior art of a an analogue double feedback for the control of a light source is disclosed in US Patent appl. No US2005088102 (2005), where illuminance is regulated without exceeding the optimal temperature of the lamp using an optical and thermal feedbacks, respectively. Consequently, the proposed invention discloses a driving circuit, which is more economic than current regulators with a ballast resistor [US5012609 (1991)] or an electronic ballast [US5278432 (1994)] and switch-mode power supplies with current-regulation feedback [US6724156 (2004)]. On the other hand, in comparison with prior-art power supplies with flux-regulation feedback [US7019662 (2006)], the proposed circuit is safe in respect of LED overload. Finally, this circuit is much more simple than digital methods disclosed in Patents EP1300066 (2003) and US6725598 (2004). The proposed circuit for driving of the solid-state illuminator with analogue double-feedback loop is more economic, compensates the temperature and aging drift of the LED output flux and is safe in respect of the LED overload.

The invention is explained in figures that depict the following.
**Fig. 1****.** General appearance of the apparatus.
**Fig. 2.** (a) General appearance of the illuminator; (b) cross-section of the illuminator.
**Fig. 3****.** Circuit diagram of the power supply.
**Fig. 4****.** Plan of the application of the proposed method in a greenhouse.
**Fig. 5****.** Typical variation of the nitrate concentration in lettuce and marjoram under treatment using the solid-state illuminator according to data presented in Table 1.
**Fig. 6****.** Typical variation of the concentration of indicatives of nutritional quality (vitamin C and saccharides) in lettuce and marjoram under treatment using the solid-state illuminator according to data presented in Tables 2 and 3.
**Fig. 7** Variation of the concentration of nitrates, vitamin C and saccharides under treatment using the solid-state illuminator with environmental conditions altered (ambient temperature reduced to 4° C) according to data presented in Table 4.
**Fig. 8** Shapes of the heat sink ribs, (a) continuous, (b) continuous perforated, (c) pinned.

In the proposed method of the reduction of residuals of harmful nitrates under illumination using a radiation flux generated by solid-state illuminator, the already grown and formed plants are treated for a short time (less than 3 days) by high-density photosynthetic photon flux. The photosynthetic photon flux density is varied from 100 to 2000 µmol·m⁻²·s⁻¹ within the wavelength range from 400 to 700 nm and with the photoperiod from 12 to 24 hours, the thermal radiation being deflected in the opposite direction from the treated plants.

To reduce the flux density up to 40 - 2000 µmol·m⁻²·s⁻¹ and/or to shorten the treatment time, the method described in the preceding paragraph is proposed to apply with at least one of the environmental conditions changed during the treatment, namely with the ambient gas composition changed (for instance, with an increased CO₂ concentration), and/or, when approaching the harvesting stage, with the nutrient solution concentration reduced, and/or with ambient temperature reduced and maintained in the range of 4 - 25° C.

For instance, with the concentration of CO₂ in the ambient gas increased up to 0,05 - 0,3%, the concentration of the nutrient solution decreased up to 0 - 33%, and the ambient temperature maintained at 20 - 25° C, the flux density is proposed to reduce up to 400 - 600 µmol·m⁻²_{·}s⁻¹ within the wavelength range of 640 - 660 nm and photoperiod of staring with 18 hours.

In an optimal case, the flux density is proposed to reduce to an optimal value of 40-100 µmol·m⁻²·s⁻¹ with the ambient temperature reduced to an optimal value of 4° C with other environmental conditions optionally changed.

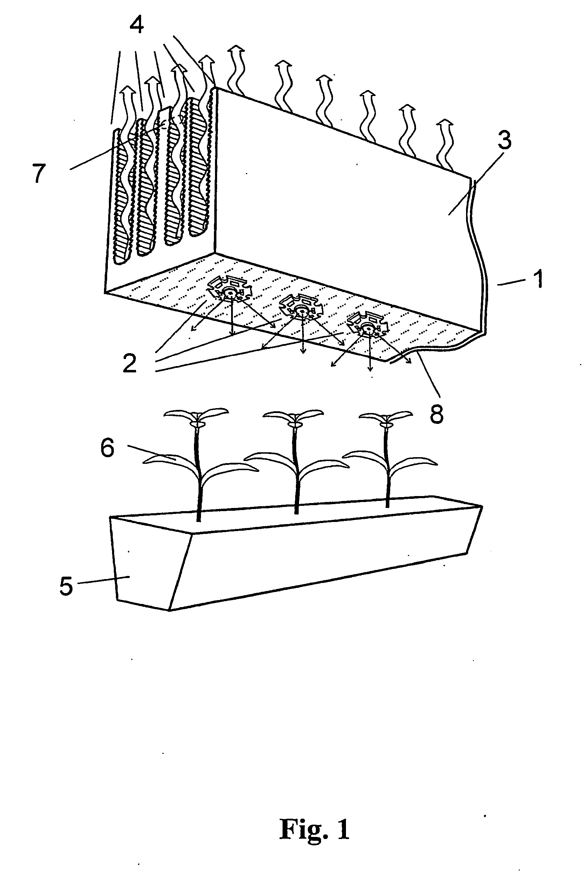

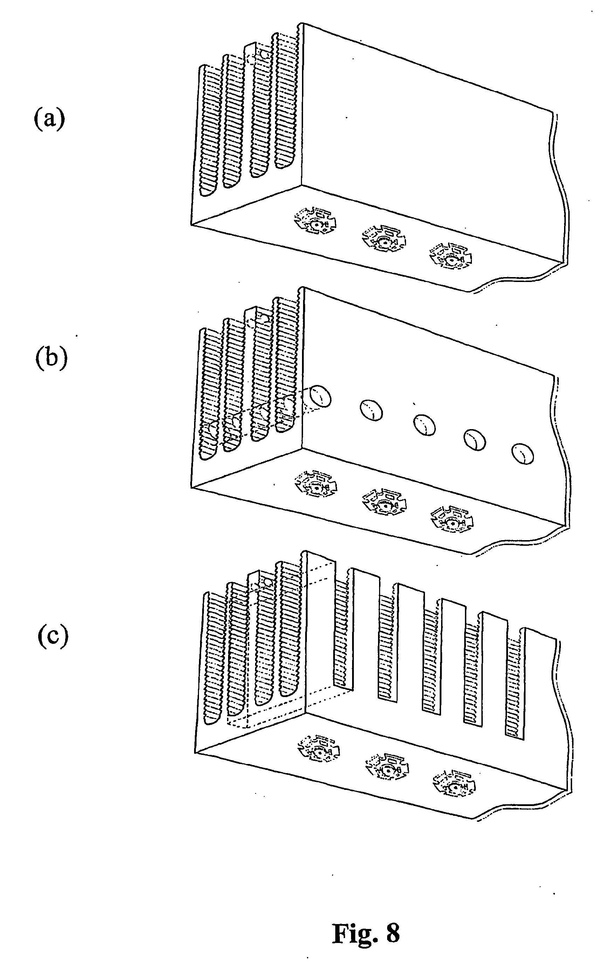

The apparatus for the implementation of the method is composed of an illuminator 1 (Fig. 1), which contains one or a plurality of high-power LEDs 2 that are mounted with spacing on the bottom face of an oblong patterned heat sink 3. The heat sink is made oblong with one or a plurality of ribs 4 that are directed up outwards from the plants. The ribs 4 of the heat sink 3 are high in comparison with the width of the sink and are directed upward in the direction opposite from the beneath placed trays 5 containing plants 6. The walls of the ribs 4 contain holes 7 that are required for mounting of the illuminator. The most appropriate material of the heat sink is aluminium. To increase the thermal radiation factor, the surface of the ribs 4 is painted or anodized to give black colour. The ribs 4 of the heat sink can be continuous (Fig. 8-a,) or perforated (Fig. 8-b,) and additionally patterned in order to increase their surface area, also the heat sink can contain a plurality of pins (Fig. 8-c,) that are directed outwards from the plants. Meanwhile the bottom face 8 of the heat sink that is directed toward the plants 6 and that the LEDs 2 are mounted on must have as low thermal radiation factor as possible. In case of an aluminium alloy, the easiest way to achieve it is to polish the bottom face 8 of the heat sink. The LEDs are mounted on the heat sink using a heat-conductive paste or glue. Such a heat sink is required in order to avoid overheating of the LEDs that generate a high radiant flux. Overheating of the LEDs 2 might reduce their radiant efficiency and life time, also hot chips of the LEDs can produce undesirable heat emission towards the plants. The heat sink 3 is designed in such a way that the semiconductor junction temperature of the LEDs would not exceed the ambient temperature by more than 20° C, whereas thermal radiation generated by the heat sink would be deflected outwards from the plants in order to avoid overheating of those. A low temperature of the LED junctions is attained by an appropriate selection of the heat sink 3 surface area and the shape of the ribs 4. Meanwhile in order to deflect thermal radiation outwards from the plants, both the shape of the heat sink as well as its orientation and the thermal radiation factors of different faces are important.

Since the width of the bottom face 8 of the heat sink 3 is small in comparison with the perimeter of the heat sink's cross-section, the thermal radiation flux directed downwards to the plants 6 is low. This allows for the prevention of overheating of the plants 6 that are contained in the trays 5. Meanwhile the major portion of heat is emitted and transported by convection of air between the ribs 4 of the heat sink, mostly vertically upwards. Besides, the narrow heat sink 3 obscures only a small amount of natural light that falls through the roof of the greenhouse.

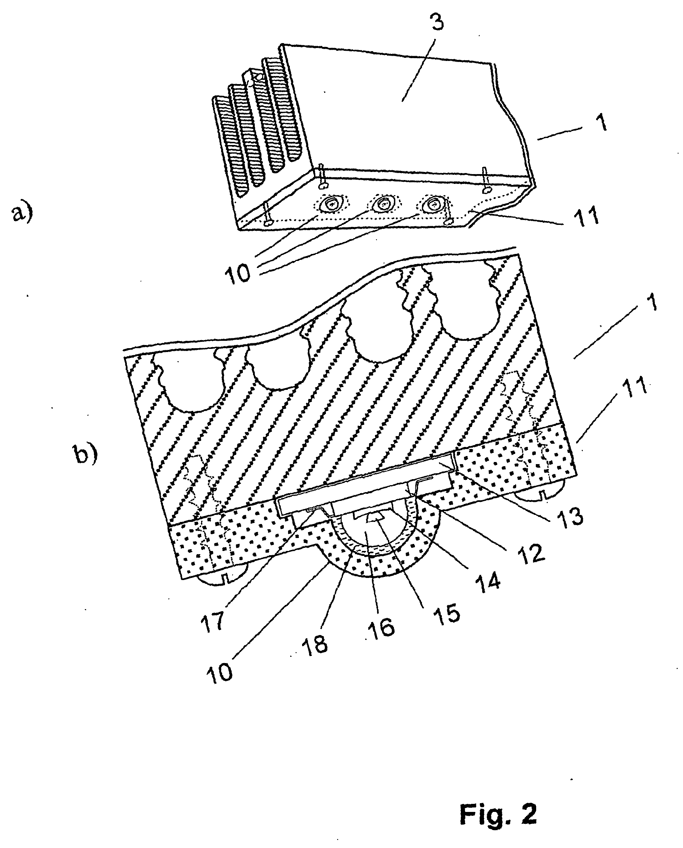

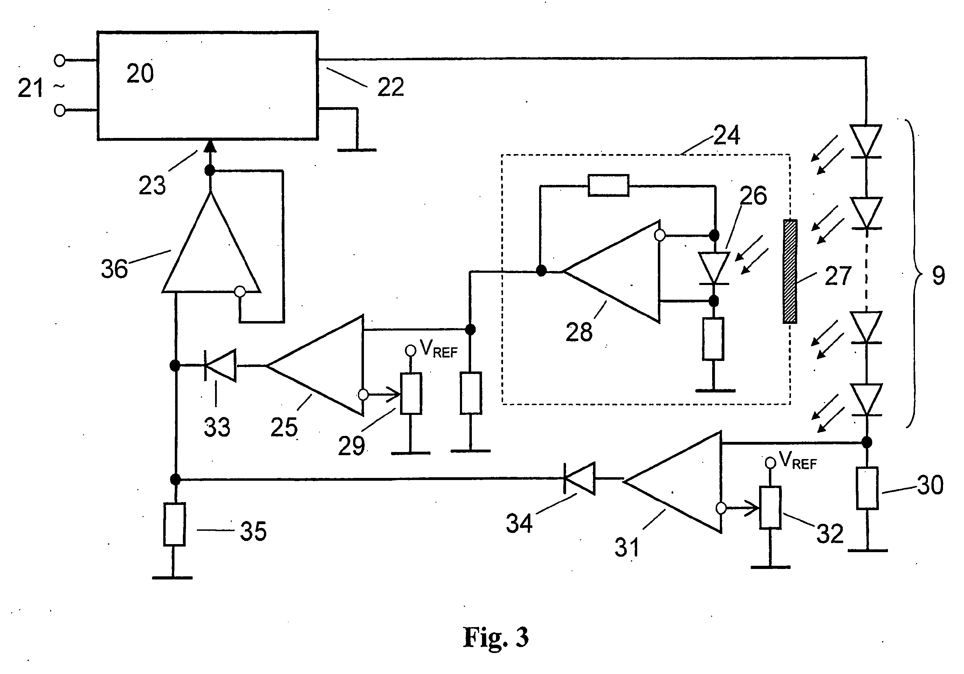

The LEDs 2 that are mounted on the bottom face 8 of the heat sink 3 are covered with a lid 11 (Fig. 2) made of a translucent material (plastic, e.g., stabilized polycarbonate). The lid is composed of hemispherical segments 10, the number of those being the same as the number of the LEDs 2 in the illuminator 1. The hemispherical segments 10 are integrated with the base of the lid 11. The illuminator preferably contains high-power LEDs 2, which commonly contain a metal slug 12 with a heat sinking base 13, a semiconductor chip 15 placed in a reflector cup 14 that is integrated with the slug 12, and a plastic or silicone dome 16. Depending on the LED 2 design, its slug 12 can be attached to a board with one side of that being heat conductive (made of metal), and another side being electrically insulating with printed electrodes that the LED 2 leads 17 are soldered to. The cover is fabricated in such a way that the geometrical centre of each hemispherical segment 10 would match the LED chip 15. Consequently, light emitted by the LED 2 would fall perpendicularly to the surface of the lid and experience a smallest reflection. Provided that the gap 18 between the LED dome 16 and the hemispherical segment 10 is filled with a material with the refraction index similar to that of plastic (1,5-1,6), possible reflections at the boundaries between the LED dome 16 and the gap 18 and between the said gap and the lid of the hemispherical segment 10 are almost excluded. For this purpose, a handy material is translucent soft grease or epoxy (e.g. silocone-based) that is applied to the LED domes 16 during the assembling. In comparison with a flat cover, such a design of the lid allows for the reduction of the optical losses for LEDs with a wide directional diagram from about 20% to less than 10%. The optical losses are additionally reduced owing to the polished bottom face of the heat sink 8 that the LEDs 2 are attached to. (A portion of light reflected from the surfaces of the lid is reflected by the polished surface of the heat sink and can escape from the illuminator on the second pass.) The base of the lid 11 is attached to the heat sink (e.g., by screws) and sealed (e.g. by a translucent sealant). The purpose of the lid is to protect the LEDs 2 and the connecting circuitry from moisture and to facilitate cleaning of the illuminator from dust and insect contamination. The peculiarities of the lid design and mounting are such that optical losses would be minimized. Since the cost per unit of the flux generated by the LEDs 2 is high, the reduction of the optical losses is important for the commercial attractiveness of the method proposed. The LEDs 2 are arranged in single or multiple strings 9 and connected to the power supply (Fig. 3).

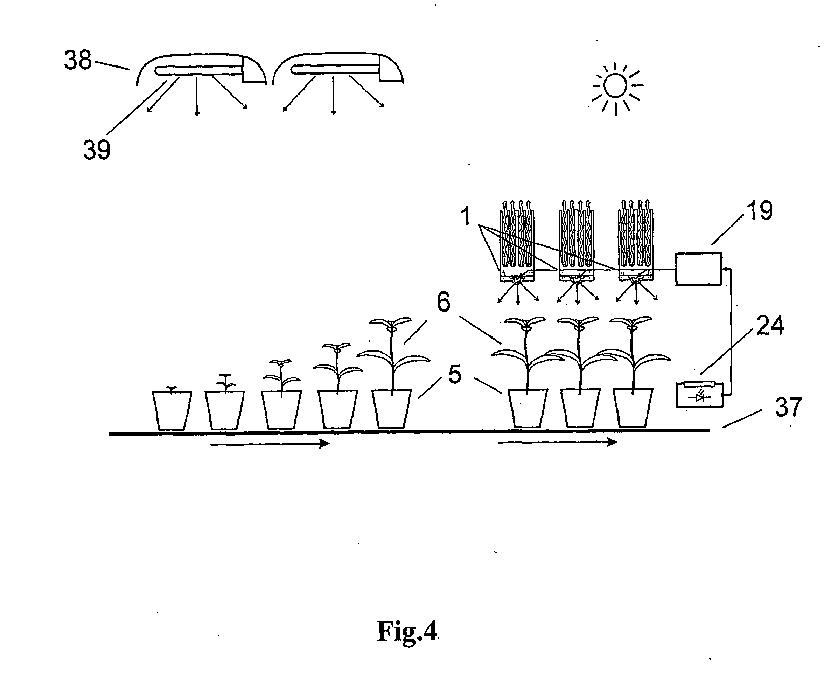

The LED power supply 19 (Fig. 4) features minimal power losses that ensure minimal operating cost of the illuminator as well as a possibility to save power at the expense of natural lighting. Since driving of the LEDs 2 requires DC current, the most efficient way of driving is use of a switch-mode power supply. The lowest power losses are achieved in switch-mode voltage converters with feedback-based current regulation without a ballast resistor. Such a power supply allows for saving of electric power at the expense of natural lighting by a corresponding reduction of the driving current. Also the design of the power supply can provide with protection of the LEDs form excess current.

The power supply 19 based on a circuit diagram shown in Fig. 3 contains a conventional switch-mode voltage converter 20 that converts AC current from mains at the input leads 21 to DC current at the output leads 22. The efficiency of such converters can be in excess of 90%. In the invention, a voltage converter with a voltage regulation circuit is used. Usually, this circuit is linked to a resistive voltage divider connected to the output of the converter. In the proposed invention, the circuit diagram of the power supply (Fig. 3) has the voltage regulation circuit disconnected from the divider and connected to the lead 23 that is used for the control of the output voltage by means of feedback. To be specific, here we consider a converter that decreases the output voltage at the leads 22 when the voltage at the said control lead is increased and vice versa.

The peculiarity of the circuit diagram of the power supply (Fig.3) is two feedback loops. One feedback loop is used for photoelectric regulation in order to maintain a constant photosynthetic photon flux density. Another feedback loop is used for the protection of the LEDs from excess current. The two feedback loops are switched by a diode-based commutator.

The photoelectric feedback loop consists of a photoelectric gauge 24 and a regulating second operational amplifier 25. The photoelectric gauge 24 contains a photodiode 26 with an optical filter 27 and a first operational amplifier 28 with a resistive feedback loop. The optical transmittance spectrum of the filter 27 (from 400 to 700 nm) is tailored to the spectral sensitivity of the photodiode 26 in such a way that the output voltage of the first operational amplifier 28 would be proportional to the measured density of photosynthetic photon flux. This voltage is fed to the non-inverting input of the second operational amplifier 25. Meanwhile the inverting input of the second operational amplifier 25 is fed with a bias voltage that is preset by the potentiometer 29 connected to a source of reference voltage V_{REF}. The bias voltage is preset in such a way that it would be equal to the voltage at the said non-inverting input that corresponds to a required magnitude of the photosynthetic photon flux density.

The protective feedback loop contains a measuring resistor 30 and a third operational amplifier 31. The measuring resistor 30 is connected in series with the LED string 9 and the voltage drop across the resistor is proportional to the current flowing through the said string. This voltage is fed to the non-inverting input of the third operational amplifier 31. The inverting input of the third operational amplifier 31 is fed with a bias voltage that is preset by a potentiometer 32 connected to a source of reference voltage V_{REF}. The bias voltage is preset in such a way that it would be equal to the voltage drop across the measuring resistor 30 when the current flowing through the LED string is of highest allowed magnitude. The power loss due to the voltage drop across the measuring resistor can be negligible, since this voltage must be just much higher than the input bias voltage of the third operational amplifier 31 (~ 1 mV) and its drift in the operating temperature range (~ 0:1 mV). For instance, for a 36-V output voltage of the converter and a peak voltage across the measuring resistor 30 of 100 mV, the loss will amount less than 0,3%.

The feedback loop commutator consists of silicon diodes 33 and 34, a resistor 35 and a fourth (commutator) operational amplifier 36. The anodes of the diodes 33 and 34 are connected to the outputs of the operational amplifiers 25 and 31 of photoelectric and protective control, respectively, while the cathodes are connected to the resistor 35. Consequently, the voltage drop across the resistor 35 is determined by a higher magnitude of the two control voltages. For instance, if the output voltage V_{P} of the second operational amplifier 25 is higher than that V_{C} of the third operational amplifier 31 (V_{P} > V_{C}), the diode 33 will be open, whereas the diode 34 will be shut off. In this case, the voltage drop across the resistor 35 is equal to about V_{P}- 1 V. In the opposite case when V_{P} < V_{C}, the voltage drop across the resistor 35 is equal to about V_{C}- 1 V. The voltage drop cross the resistor 35 is fed to the non-inverting input of the fourth operational amplifier 36. The operational amplifier 36 is configured into a voltage follower circuit and its output is connected to the control lead 23 of the switch-mode converter 20.

### EXAMPLE 1. Particular implementation of the invention method using the apparatus disclosed in the invention.

At the planting terminal of a greenhouse (Fig. 4), seedlings 6 of leafy vegetables are planted into trays 5, which the nutrient medium is flowing in. Here leafy vegetables can be various plants, which have edible leaves of other chlorophyll containing organs, such as lettuce, onion leaves, leek, various leafy cabbages, spinach, parsley, cauliflower, chard, leafy turnip, broccoli, mustard, dill, marjoram, green peas, wheat and barley grass, cucumber, etc. The trays 5 with seedlings 6 are gradually transported by a conveyor towards the harvesting terminal 37 in such a way that the terminal is reached at the end of the growth cycle (20-40 days). During the growth, the plants are illuminated by natural light that penetrates through the translucent greenhouse roof and, additionally, by electrical illuminators 38, which contain high-pressure sodium, fluorescent, mercury, metal-halide or other kind of conventional lamps 39. These lamps are hung high in order to achieve uniform distribution of the generated light and to avoid overheating of the plants: The photosynthetic photon flux density generated by the lamps is commonly of about 100 µmol·m⁻²·s⁻¹ and the photoperiod can range from 12/12 h to 24/0 h.

Just before the harvesting terminal 37, the trays with already formed and grown plants 6 fall under the solid-state illuminators 1 and are gradually transported under the said illuminators up to the harvesting terminal 37. At this technological stage, the concentration of fertilizers in the nutrient medium can be partially reduced or the fertilizing can be completely discontinued. The said solid-state illuminators radiate high-density photosynthetic photon flux in the wavelength range of 400 - 700 nm. The illumination spectrum can contain one or a plurality emission bands peaked in the said spectral range. The illuminators 1 are hung low in order to reduce the losses due to lateral leakage of light and to simultaneously reduce luminous pollution (undesired leakage of light through the walls and roof of the greenhouse). The design of the illuminators 1 ensures that thermal emission towards the plants is sufficiently low to avoid overheating of the plants. The density of the arrangement of the illuminators is chosen in such a way that the peak density of the photosynthetic photon flux is from 40 µmol·m⁻²·s⁻¹. to 2000 µmol·m⁻²·s⁻1, depending on the plant species, duration of treatment and environmental conditions. The duration of treatment can range from 1 to 3 days and the photoperiod can range from 12/12 h to 20/4 h.

In order to save expenses for power and to prolong the exploitation life time of the LEDs, the flux generated by the illuminators 1 is controlled by the photoelectric gauge 24 that is placed in the proximity of the trays and connected to the LED power supply 19. The control is performed in a following way. Let us assume that the driving current through the LED string 9 does not exceed the maximum allowed one. Then the output of the operational amplifier 31 is low and the diode 34 is shut off. The output of the converter 20 is controlled by the photoelectric feedback loop in such a way that the voltage drop across the inputs of the second operational amplifier 25 is almost zero, its output is positive and the diode 33 is open. As the photosynthetic photon flux density is increased or decreased, the control voltage varies in such a way that this increase or decrease would be compensated by a decrease or increase of the LED driving current, respectively. However, if the driving current attains the maximal allowed value, the output of the third operational amplifier 31 becomes high, the diode 34 is opened, and the diode 33 is shut off. Then the output of the converter 20 is controlled by the protection feedback loop in such a way that the voltage drop across the inputs of the third operational amplifier 31 is almost zero and its output is the positive control voltage. Since in this case the photosynthetic photon flux density is lower than the preset one, the output of the second operational amplifier 25 is low and the diode 33 cannot be opened. If the photosynthetic photon flux density increases to a preset value (for instance, the external illuminance is increased or the LEDs are cooled down), the feedback loop switches to the photoelectric control and the LED driving current is reduced.

Owing to photoelectric feedback, such a driving circuit compensates the thermal and aging drift of the flux generated by the LEDs and the power is saved at the expense of external lighting.

The circuit of the power supply control (Fig. 3.) and the spectral sensitivity of the photoelectric gauge ensure that the net artificial and natural photosynthetic photon flux density is maintained constant and conforms to the preset value. This means that during a sunny day, the flux generated by the illuminators can be reduced to a minimal value, whereas in the darkness, the illuminators will generate the maximal flux. However, the driving current of the LED will not exceed the maximal allowed value in order to prevent a reduction of the LED life time.

### EXAMPLE 2. Assessment of nutritional quality of plants treated by radiant flux that is generated by the solid-state illuminator.

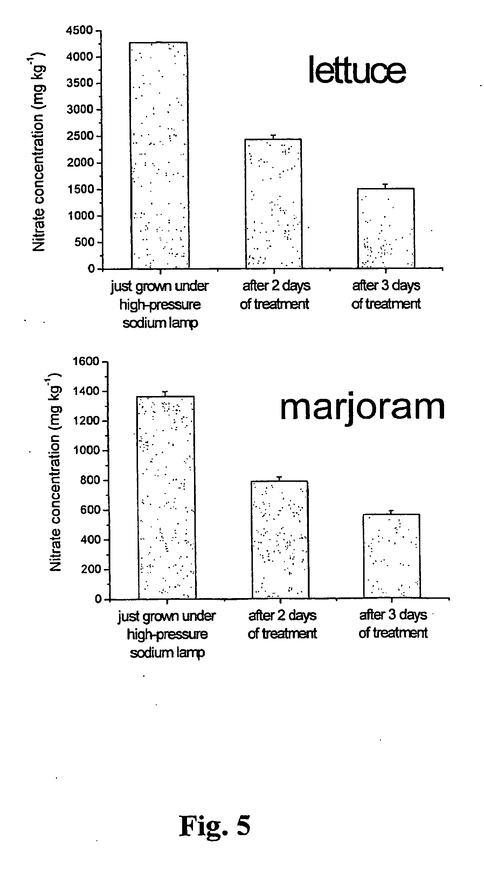

Figure 5 shows a typical variation of the nitrate concentration in leafy vegetables (lettuce "GRAND RAPIDS" and marjoram "MAIRÜNAI KVAPIEJI") in the stage of technical maturity. The concentration of nitrates was measured just after growth and after 2 and 3 days of treatment under the solid-state illuminator 1 following the method described in Example 1. The growth was performed in 30 days under a high-pressure sodium lamp with a photosynthetic flux density of 100 µmol·m⁻²·s⁻¹ and photoperiod of 18/6 h. During the growth, the temperature was maintained at 21/17°C (day/night). The treatment was performed under LEDs with the spectral power density peaked at 640 nm wavelength and with the photosynthetic photon flux density of 500 µmol·m⁻²·s⁻¹ and photoperiod of 24/0 h. Lettuce was grown by giving nutrition by hydroponic method, whereas marjoram was grown in solid substrate. The nitrate concentration was determined by a potentiometric method with nitrate-ion selective electrode. In Table 1, numerical values of the nitrate concentration are presented.

Figure 5 and Table 1 show that the concentration of nitrates in vegetable leaves exposed to solid-state illuminator is noticeably reduced (almost by 2 times) already after 2 days of treatment, whereas after 3 days it is from 2.4 to 3 times lower than just after growth. These results indicate that by using the proposed invention, a noticeable reduction in nitrate concentration can be achieved within a considerably shorter time than that indicated in Patent Application JP2005245243 (2006).

**Table 1 Nitrate concentration (mg·kg⁻¹) in lettuce and marjoram just after growth under a high-pressure sodium lamp and after treatment under the solid-state illuminator (Fig. 5).**

| Plant species | Just after growth under high-pressure sodium lamp | After 2 days of treatment under solid-state illuminator | After 3 days of treatment under solid-state illuminator |
|---|---|---|---|
| Lettuce | 4274±18 | 2441±76 | 1513±82 |
| Marjoram | 1364±32 | 790±28 | 563±25 |

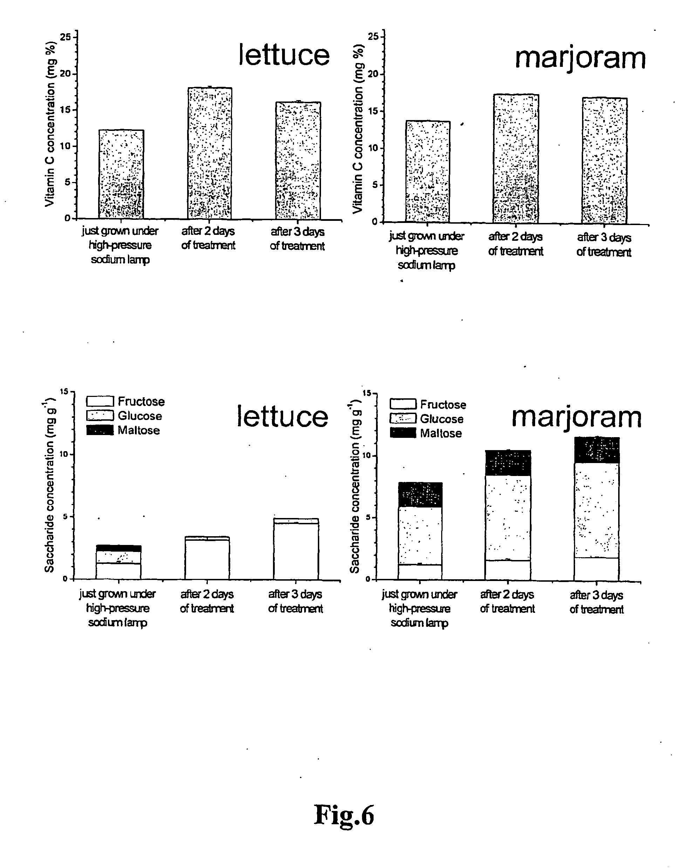

Figure 6 and Tables 2 and 3 demonstrate typical results of biochemical assessment of the reference plants and those treated using the solid-state illuminator, namely, variation of the concentration of vitamin C, as well as monosaccharides (fructose and glucose) and disaccharides (sucrose and maltose). A larger amount of these compounds is an indicative of a higher nutritional quality of the vegetables. Besides, variation of the composition of saccharides with the reduction of the ratio of the amounts of disacchrides and monosaccharides is an additional positive indicative of nutritional quality, since monosaccharides are easier to assimilate. The measurements were performed in the same plants and simultaneously with the measurements of the nitrate concentration as shown in Fig. 5. Vitamin C was determined by titrating with 2,6-dichlorphenolindophenol sodium salt, whereas saccharides were determined by high-performance liquid chromatography (HPLC). In Tables 2 and 3, numerical values of the vitamin C and saccharides concentration are presented.

Figure 6 and Table 2 show that the amount of vitamin C in lettuce and marjoram is increased from 1.3 to 1.5 times already after 2 days of treatment under the solid- state illuminator. Later (after 3 days), the amount of vitamin C stops increasing or marginally decreases.

Figure 6 and Table 3 show that treatment by the solid-state illuminator results in a considerable increase of the concentration of monosaccharide fructose in lettuce. In spite of that simultaneously the concentration of another monosaccharide, glucose, is reduced, the net monosaccharide concentration is increased by more than 2 times after 3 days of treatment. Meanwhile the concentration of disaccharide maltose, which is of lower nutritional value, is decreased to almost zero. This indicates that the composition of saccharides in lettuce treated by solid-state illuminator does not degrade, but actually is considerably improved.

Figure 6 and Table 3 show similar results for marjoram. In this case the concentration of disaccharide maltose remains almost unchanged, whereas the net concentration of nutritionally more valuable monosaccharides is increased by 1.6 times after 3 days of treatment under the solid-state illuminator. This indicates that nutritional quality of marjoram treated by the solid-state illuminator also does not degrade.

**Table 2. Vitamin C concentration (mg·%) in lettuce and marjoram just after growth under a high-pressure sodium lamp and after treatment under the solid-state illuminator (Fig. 6).**

| Plant species | Just after growth under high-pressure sodium lamp | After 2 days of treatment under solid-state illuminator | After 3 days of treatment under solid-state illuminator |
|---|---|---|---|
| Lettuce | 12, 3±0,1 | 18,2±0,2 | 16,2±0,2 |
| Marjoram | 13,7±0,1 | 17,5±0,1 | 17,1±0,1 |

These results indicate that during the reduction of harmful nitrate residuals in leafy vegetables by short-term treatment under high-density photosynthetic flux generated by the solid-state illuminator, the indicatives of nutritional quality (concentration of vitamin C and carbohydrates) do not degrade. Meanwhile in Patent Application JP2005245243 (2006) no proof is presented that during a relatively long treatment (more than 3 days before harvesting and/or more than one week after harvesting) nutritional quality of vegetables does not degrade.

**Table 3. Saccharides concentration (mg·g⁻¹) in lettuce and marjoram just after growth under a high-pressure sodium lamp and after treatment under the solid-state illuminator (Fig. 6).**

| Plant Species | Saccharide | Just after growth under high-pressure sodium lamp | After 2 days of treatment under solid-state illuminator | After 3 days of treatment under solid-state illuminator |
|---|---|---|---|---|
| Lettuce | Fructose (mono-) | 1,25±0,16 | 3,17±0,26 | 4,57±0,08 |
| | Glucose (mono-) | 0,97±0,16 | 0,26±0,02 | 0,37±0,02 |
| | Maltose (di-) | 0,48±0,01 | - | - |
| Marjoram | Fructose (mono-) | 1,23±0.13 | 1,61±0,11 | 1,89±0,10 |
| | Glucose (mono-) | 4,68±0,05 | 6,89±0,05 | 7,67±0,05 |
| | Maltose (di-) | 1,97±0,06 | 2,01±0,07 | 2,08±0,08 |

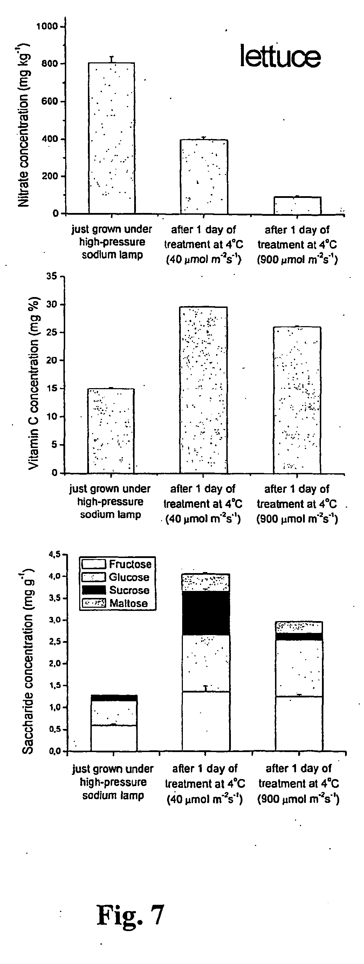

**Table 4. Concentration of nitrates, vitamin C, and saccharides in lettuce just after growth under a high-pressure sodium lamp and after treatment under the solid-state illuminator at the ambient temperature reduced to 4° C (Fig. 7).**

| Indicative of quality | Just after growth under high-pressure sodium lamp | After 1 day of treatment under solid-state illuminator with 40 µmol·m⁻²·s⁻¹ | After 1 day of treatment under solid-state illuminator with 900 µmol·m⁻²·s⁻¹ |
|---|---|---|---|
| Nitrates (mg·kg⁻¹) | 807±32 | 586±15 | 96±6 |
| Vitamin C (mg·%) | 15,0±0.2 | 29,7±0,1 | 26,2±0,2 |
| Fructose (mg·g⁻¹) | 0,59±0,03 | 1,36±0,13 | 1,25±0,04 |
| Glucose (mg·g⁻¹) | 0,55±0,02 | 1,30±0,11 | 1,29±0,11 |
| Sucrose (mg·g⁻¹) | 0,14±0,01 | 1,01±0,05 | 0,17±0,01 |
| Maltose (mg·g⁻¹) | 0 | 0,40t0,03 | 0,26±0,01 |

Figure 7 demonstrates variation of the concentration of nitrates, vitamin C and saccharides in lettuce ("GRAND RAPIDS") treated at altered environmental conditions (reduced ambient temperature). Lettuce was grown under high-pressure sodium lamp in solid substrate. The growth was performed in 30 days under high-pressure sodium lamp with the photosynthetic photon flux density of 100 µmol·m⁻²·s⁻¹, photoperiod of 18/6 h, and temperature of 21/17°C (day/night). After the growth, lettuce was transferred to a climate chamber, where treatment was carried out at 4° C temperature with a photoperiod of 24/0 h. The treatment was performed under LEDs with the spectral power density peaked at 640 nm wavelength for two values of the photosynthetic photon flux density of 40 µmol·m⁻²·s⁻¹ and 900 µmol·m⁻²·s⁻¹. The concentration of nitrates, vitamin C, and saccharides was determined as described above. In Table 4, numerical values of the concentration of nitrates, vitamin C and saccharides are presented.

Figure 7 and Table 4 show that under the environmental conditions changed (ambient temperature reduced to 4° C), the concentration of nitrates in lettuce is noticeably reduced (about 1.4 times) just after one day of treatment even under relatively moderate density of the photosynthetic flux (40 µmol·m⁻²·s⁻¹). When a high-density photosynthetic flux (900 µmol·m⁻²·s⁻¹) is applied, the reduction amounts 8.4 times after one day of treatment. Correspondingly, the concentration of vitamin C and saccharides is increased. These results indicate that by using altered environmental conditions (e.g., a reduced ambient temperature), the reduction of nitrates can be achieved within a shorter treatment time and/or with a lower photosynthetic flux density in comparison with treatment at the same conditions as those of the growth.

## Claims

1. A method of the reduction of harmful nitrates in plants, wherein plants are treated by photosynthetic photon flux generated by a solid-state illuminator, **characterised in that**
the plants are treated by photosynthetic photon flux for no more than 3 days after growth or at the harvesting stage,
the photosynthetic photon flux density is regulated from 100 to 2000 µmol·m⁻²·s⁻¹ within the wavelength range of 400 - 700 nm and the photoperiod of 12 - 24 hours,
the thermal radiation of the illuminator is declined in the direction opposite from the treated plants.

2. The method according to claim 1,
**characterised in that**
the plants are treated by photosynthetic photon flux for no more than 3 days after growth or at the harvesting stage,
the photosynthetic photon flux density is regulated from 40 to 2000 µmol·m⁻²·s⁻¹ within the wavelength range of 400 - 700 nm and the photoperiod of 12 - 24 hours,
the thermal radiation of the illuminator is declined in the direction opposite from the treated plants with the environmental conditions altered by:
changing of the gas content (CO₂ concentration) in the ambient atmosphere, and/or
reducing of the concentration of the nutrient solution at the harvesting stage, and/or
reducing of ambient temperature and maintaining it in the range of 4 - 25° C.

3. The method according to claim 2, **characterised in that** the photosynthetic flux density is reduced up to 400-600 µmol·m⁻²·s⁻¹ within the wavelength range of 640 - 660 nm and the photoperiod from 18 to 24 hours for ambient temperature maintained in the range of 20 - 25° C, by:
increasing of the concentration of CO₂ in ambient atmosphere up to 0,05 - 0,3%, and/or
reducing of the concentration of the nutrient solution up to 0 - 33%.

4. The method according to claim 2, **characterised in that** the plants are treated for no more than 1 day by the photosynthetic photon flux reduced optimally up to 40 -100 µmol·m⁻²·s⁻¹, when the ambient temperature is reduced optimally up to 4° C with the other environmental conditions optionally altered.

5. An apparatus for the implementation of the method according to any of claims 1 to 4, consisting of an illuminator (1), which contains one or a plurality of LEDs (2) mounted with spacing on an oblong heat sink (3) that is placed over the treated plants (6), and a power supply (19) that the illuminator is connected to, **characterised in that**
the said heat sink is made oblong with one or a plurality of ribs (4), which can be continuous, perforated or pinned and are directed up outwards the plants (6);
the surface of the said ribs is treated in such a way that the thermal radiation factor would be maximized;
the bottom face (8) of the heat sink that the LEDs (2) are mounted on is of an area much smaller than that of the said ribs and its surface is processed in such a way that the thermal radiation factor is minimized;
the said bottom face (8) and the LEDs (2) are covered by a translucent lid (11).

6. The apparatus according to claim 5, **characterised in that** the translucent lid (11) is composed of hemispherical segments (10) with their centres matching the LED chips (15); the gap (18) between the said lid and the translucent domes of the LEDs is filled by a translucent grease or epoxy with the refraction index value close to that of the lid (11) and domes (16).

7. The apparatus according to claim 5, **characterised in that** the power supply (19) is based on a switch-mode voltage converter (20) with the output voltage regulated by two feedback loops, a photoelectric and a protective ones, that are switched by an electronic commutator depending on which of two quantities (the net ambient and illuminator-generated photosynthetic photon flux density or the driving current) is to be limited.

8. The apparatus according to claim 7, **characterised in that** the photoelectric feedback loop has
a photoelectric gauge (24), consisting a photodiode (26) equipped with an optical filter (27) and a first operational amplifier (28) with a resistive feedback loop; and
a second operational amplifier (25) with a first potentiometer (29), thereby the optical transmittance spectrum of the filter (27), which ranges from 400 to 700 nm is tailored to the spectral sensitivity of the photodiode (26) in such a way that the output voltage of the first operational amplifier (28) is proportional to the photosynthetic photon flux density;
the protective feedback loop consists of a third operational amplifier (31) connected to a measuring resistor (30), which is connected in series with the LED string (9), and to a second potentiometer (32).

9. The apparatus according to claim 8, **characterised in that** the feedback loop commutator contains two silicon diodes (33) and (34), a resistor (35) connected to a fourth operational amplifier (36), when the anodes of the diodes (33) and (34) are connected to the outputs of the second (photoelectric-loop) amplifier (25) and third (protective-loop) amplifier (31), respectively, and the cathodes of the said diodes are connected to the resistor (35).

10. The apparatus according to any of claims 5 to 9, **characterised in that** the LEDs (2) emit at one or a plurality of wavelengths in the wavelength range of 400 to 700 nm.

## Patentansprüche

1. Verfahren zur Verringerung von schädlichen Nitraten in Pflanzen, wobei Pflanzen durch photosynthetischen Photonenfluss behandelt werden, der durch eine Festkörper-Beleuchtungseinrichtung erzeugt wird, **dadurch gekennzeichnet, dass**:
die Pflanzen für nicht mehr als 3 Tage nach dem Wachstum oder im Erntestadium durch photosynthetischen Photonenfluss behandelt werden,
die photosynthetische Photonenflussdichte von 100 bis 2000 µmol·m⁻²·s⁻¹ innerhalb des Wellenlängenbereichs von 400 bis 700 nm und der Photoperiode von 12 bis 24 Stunden reguliert wird,
die Wärmestrahlung der Beleuchtungseinrichtung in der entgegengesetzten Richtung von den behandelten Pflanzen geneigt wird.

2. Verfahren Anspruch 1, **dadurch gekennzeichnet, dass**:
die Pflanzen für nicht mehr als 3 Tage nach dem Wachstum oder im Erntestadium durch photosynthetischen Photonenfluss behandelt werden,
die photosynthetische Photonenflussdichte von 40 bis 2000 µmol m⁻²·s⁻¹ innerhalb des Wellenlängenbereichs von 400 bis 700 nm und der Photoperiode von 12 bis 24 Stunden reguliert wird,
die Wärmestrahlung der Beleuchtungseinrichtung in der entgegengesetzten Richtung von den behandelten Pflanzen geneigt wird, wobei die Umgebungsbedingungen geändert werden, durch:
Ändern des Gasgehalts (CO₂-Konzentration) in der Umgebungsluft und/oder
Verringern der Konzentration der Nährlösung im Erntestadium und/oder Senken und Halten der Umgebungstemperatur im Bereich von 4 bis 25°C.

3. Verfahren nach Anspruch 2, **dadurch gekennzeichnet, dass** die photosynthetische Flussdichte aufbis zu 400 bis 600 µmol·m⁻²·s⁻¹ innerhalb des Wellenlängenbereichs von 640 bis 660 nm und der Photoperiode von 18 bis 24 Stunden für eine Umgebungstemperatur, die im Bereich von 20 bis 25 °C gehalten wird, verringert wird durch:
Erhöhen der Konzentration von CO₂ in der Umgebungsluft auf bis zu 0,05 bis 0,3 % und/oder
Verringern der Konzentration der Nährlösung auf bis zu 0 bis 33 %.

4. Verfahren nach Anspruch 2, **dadurch gekennzeichnet, dass** die Pflanzen für nicht mehr als 1 Tag durch den photosynthetischen Photonenfluss behandelt werden, der optimal auf bis zu 40 bis 100 µmol·m⁻²·s⁻¹ verringert wird, wenn die Umgebungstemperatur optimal auf bis zu 4 °C gesenkt wird, wobei die anderen Umgebungsbedingungen optimal geändert werden.

5. Vorrichtung für die Implementierung des Verfahrens nach einem der Ansprüche 1 bis 4, bestehend aus einer Beleuchtungseinrichtung (1), welche eine oder eine Mehrzahl von LEDs (2) enthält, die mit einem Abstand auf einer länglichen Wärmesenke (3) montiert sind, die über den behandelten Pflanzen (6) angeordnet ist, und einer Energieversorgung (19), an welche die Beleuchtungseinrichtung angeschlossen ist, **dadurch gekennzeichnet, dass**:
die Wärmesenke länglich mit einer oder einer Mehrzahl von Rippen (4) ausgeführt ist, welche durchgehend, gelocht oder verstiftet sein können und aufwärts nach außen von den Pflanzen (6) gerichtet sind;
die Oberfläche der Rippen derart behandelt ist, dass der Wärmestrahlungsfaktor maximiert ist;
die Unterseite (8) der Wärmesenke, auf der die LEDs (2) montiert sind, von einem Bereich ist, der wesentlich kleiner als der von den Rippen ist, und
ihre Oberfläche derart bearbeitet ist, dass der Wärmestrahlungsfaktor minimiert ist;
die Unterseite (8) und die LEDs (2) durch einen lichtdurchlässigen Deckel (11) abgedeckt sind.

6. Vorrichtung nach Anspruch 5, **dadurch gekennzeichnet, dass** der lichtdurchlässige Deckel (11) aus halbkugelförmigen Segmenten (10) besteht, deren Mitten den LED-Chips (15) entsprechen; der Spalt (18) zwischen dem Deckel und den lichtdurchlässigen Kuppeln der LEDs durch ein lichtdurchlässiges Fett oder Epoxidharz gefüllt ist, dessen Brechungsindexwert nahe demjenigen des Deckels (11) und der Kuppeln (16) ist.

7. Vorrichtung nach Anspruch 5, **dadurch gekennzeichnet, dass** die Energieversorgung (19) auf einem Spannungswandler mit Schaltbetrieb (20) basiert, wobei die Ausgangsspannung durch zwei Rückkopplungsschleifen, eine photoelektrische und eine schützende, geregelt wird, die durch einen elektronischen Kommutator in Abhängigkeit davon geschaltet werden, welche von zwei Größen (der durch die Umgebung und die Beleuchtungseinrichtung erzeugten photosynthetischen Netto-Photonenflussdichte oder dem Antriebsstrom) zu begrenzen sind.

8. Vorrichtung nach Anspruch 7, **dadurch gekennzeichnet, dass** die photoelektrische Rückkopplungsschleife
ein photoelektrisches Messgerät (24), bestehend aus einer Photodiode (26) ausgestattet mit einem optischen Filter (27) und einem ersten Operationsverstärker (28) mit einer widerstandsbehafteten Rückkopplungsschleife; und
einen zweiten Operationsverstärker (25) mit einem ersten Potenziometer (29) aufweist, wodurch das optische Transmissionsspektrum des Filters (27), welches von 400 bis 700 nm recht, derart auf die spektrale Empfindlichkeit der Photodiode (26) zugeschnitten ist, dass die Ausgangsspannung des ersten Operationsverstärkers (28) proportional zur photosynthetischen Photonenflussdichte ist;
die schützende Rückkopplungsschleife aus einem dritten Operationsverstärker (31) besteht, der mit einem Messwiderstand (30), welcher mit der LED-Kette (9) in Reihe geschaltet ist, und einem zweiten Potenziometer (32) verbunden ist.

9. Vorrichtung nach Anspruch 8, **dadurch gekennzeichnet, dass** der Rückkopplungsschleifen-Kommutator zwei Silicium-Dioden (33) und (34) sowie einen Widerstand (35) enthält, der mit einem vierten Operationsverstärker (36) verbunden ist, wenn die Anoden der Dioden (33) und (34) mit den Ausgängen des zweiten Verstärkers (25) (der photoelektrischen Schleife) bzw. dem dritten Verstärker (31) (der schützenden Schleife) verbunden sind und die Kathoden der Dioden mit dem Widerstand (35) verbunden sind.

10. Vorrichtung nach einem der Ansprüche 5 bis 9, **dadurch gekennzeichnet, dass** die LEDs (2) bei einer oder einer Mehrzahl von Wellenlängen im Wellenlängenbereich von 400 bis 700 nm emittieren.

## Revendications

1. Procédé pour la réduction des nitrates nocifs dans les plantes, dans lequel les plantes sont traitées par un flux photonique photosynthétique généré par un dispositif d'éclairage à l'état solide, **caractérisé en ce que**
les plantes sont traitées par un flux photonique photosynthétique pendant une durée n'excédant pas 3 jours après la croissance ou au moment de la récolte,
la densité du flux photonique photosynthétique est établie dans la plage de 100 à 2 000 µmol.m⁻².s⁻¹ dans la plage de longueur d'onde de 400 à 700 nm et la photopériode de 12 à 24 heures,
la thermorayonnance du dispositif d'éclairage est réduite dans la direction opposée aux plantes traitées.

2. Procédé selon la revendication 1, **caractérisé en ce que**
les plantes sont traitées par un flux photonique photosynthétique pendant une durée n'excédant pas 3 jours après la croissance ou au moment de la récolte,
la densité du flux photonique photosynthétique est établie dans la plage de 40 à 2 000 µmol.m⁻².s⁻¹ dans la plage de longueur d'onde de 400 à 700 nm et la photopériode de 12 à 24 heures,
la thermorayonnance du dispositif d'éclairage est réduite dans la direction opposée aux plantes traitées avec les conditions environnementales modifiées par :
modification de la teneur en gaz (concentration de CO₂) de l'atmosphère ambiante, et/ou
réduction de la concentration de la solution nutritive au moment de la récolte, et/ou
réduction de la température ambiante et maintien de celle-ci dans la plage de 4 à 25 °C.

3. Procédé selon la revendication 2, **caractérisé en ce que** la densité du flux photosynthétique est réduite jusqu'à 400 à 600 µmol.m⁻².s⁻¹ dans la plage de longueur d'onde de 640 à 660 nm et la photopériode de 18 à 24 heures pour une température ambiante maintenue dans la plage de 20 à 25 °C, par :
augmentation de la concentration de CO₂ de l'atmosphère ambiante jusqu'à 0,05 à 0,3 %, et/ou
réduction de la concentration de la solution nutritive jusqu'à 0 à 33 %.

4. Procédé selon la revendication 2, **caractérisé en ce que** les plantes sont traitées pendant une durée n'excédant pas 1 jour par le flux photonique photosynthétique réduit de façon optimale jusqu'à 40 à 100 µmol.m⁻².s⁻¹, lorsque la température ambiante est réduite de façon optimale jusqu'à 4°C, les autres conditions environnementales étant optionnellement modifiées.

5. Appareil servant à mettre en oeuvre le procédé selon l'une quelconque des revendications 1 à 4, constitué d'un dispositif d'éclairage (1), qui contient une ou une pluralité de DEL (2) montées avec un espacement sur un dissipateur thermique oblong (3) qui est placé au-dessus des plantes traitées (6), et d'une alimentation électrique (19) à laquelle est raccordé le dispositif d'éclairage, **caractérisé en ce que**
ledit dissipateur thermique a une forme oblongue et comporte une ou une pluralité de saillies (4), qui peuvent être continues, perforées ou à broches et qui sont orientées vers le haut, dans la direction opposée aux plantes (6) ;
la surface desdites saillies est traitée de manière à ce que le facteur de thermorayonnance soit maximal ;
la surface inférieure (8) du dissipateur thermique sur lequel les DEL (2) sont montées a une aire bien inférieure à celle desdites saillies et sa surface est traitée de manière à ce que le facteur de thermorayonnance soit minimal ;
ladite surface inférieure (8) et les DEL (2) sont recouvertes par un couvercle translucide (11).

6. Appareil selon la revendication 5, **caractérisé en ce que** le couvercle translucide (11) présente des segments hémisphériques (10) dont le centre correspond aux puces DEL (15) ; l'espace (18) entre ledit couvercle et le dôme translucide des DEL est rempli d'une graisse ou d'une époxy translucide dont l'indice de réfraction est proche de celui du couvercle (11) et des dômes (16).

7. Appareil selon la revendication 5, **caractérisé en ce que** l'alimentation électrique (19) est basée sur un convertisseur de tension commuté (20), la tension de sortie étant régulée par deux boucles de rétroaction, une photoélectrique et une de protection, qui sont l'une ou l'autre allumées par un commutateur électronique en fonction de la quantité (la densité du flux photonique photosynthétique net ambiant et généré par le dispositif d'éclairage ou bien le courant de commande) qui doit être limitée.

8. Appareil selon la revendication 7, **caractérisé en ce que** la boucle de rétroaction photoélectrique comporte
un capteur photoélectrique (24), constitué d'une photodiode (26) équipée d'un filtre optique (27) et d'un premier amplificateur opérationnel (28) présentant une boucle de rétroaction résistive ; et
un second amplificateur opérationnel (25) doté d'un premier potentiomètre (29), moyennant quoi le spectre de transmittance optique du filtre (27), qui varie de 400 à 700 nm, est ajusté à la sensibilité spectrale de la photodiode (26) de manière à ce que la tension de sortie du premier amplificateur opérationnel (28) soit proportionnelle à la densité du flux photonique photosynthétique ;
la boucle de rétroaction de protection est constituée d'un troisième amplificateur opérationnel (31) raccordé à une résistance de mesure (30), qui est raccordée en série à la série de DEL (9), et à un second potentiomètre (32).

9. Appareil selon la revendication 8, **caractérisé en ce que** le commutateur de la boucle de rétroaction contient deux diodes au silicium (33) et (34), une résistance (35) raccordée à un quatrième amplificateur opérationnel (36), lorsque les anodes des diodes (33) et (34) sont raccordées aux sorties du second amplificateur (25) (boucle photoélectrique) et au troisième amplificateur (31) (boucle de protection), respectivement, et que les cathodes desdites diodes sont raccordées à la résistance (35).

10. Appareil selon l'une quelconque des revendications 5, to 9, **caractérisé en ce que** les DEL (2) émettent à une ou à une pluralité de longueurs d'onde dans la plage de longueur d'onde de 400 à 700 nm.
